(19) Europäisches Patentamt
European Patent Office
Office européen des brevets

(11) EP 0 737 728 B1

(12) **FASCICULE DE BREVET EUROPEEN**

(45) Date de publication et mention de la délivrance du brevet:
**04.12.2002 Bulletin 2002/49**

(51) Int Cl.[7]: **C09D 17/00**, C09D 7/02, C09D 5/02, D21H 19/58, B01F 17/00

(21) Numéro de dépôt: **96420109.9**

(22) Date de dépôt: **03.04.1996**

(54) **Copolymères utilisés comme dispersant améliorant la résistance à l'eau des films de compositions aqueuses chargées et/ou pigmentées ainsi que les compositions les contenant**

Copolymere Dispergiermittel zur Verbesserung der Wasserbeständigkeit von wässrigen pigmentierten Beschichtungsmitteln

Copolymers as dispersants to improve the water resistance of aqueous pigmented coating compositions

(84) Etats contractants désignés:
**BE CH DE DK ES FI FR GB IT LI NL SE**

(30) Priorité: **10.04.1995 FR 9504487**

(43) Date de publication de la demande:
**16.10.1996 Bulletin 1996/42**

(73) Titulaire: **COATEX S.A.S.**
**69730 Genay (FR)**

(72) Inventeurs:
- **Grondin, Henri**
  **69580 Sathonay Village (FR)**
- **Egraz, Jean-Bernard**
  **69130 Ecully (FR)**
- **Suau, Jean-Marc**
  **69480 Lucenay (FR)**

(56) Documents cités:

| | |
|---|---|
| **EP-A- 0 099 179** | **EP-A- 0 364 328** |
| **EP-A- 0 542 644** | **US-A- 3 980 602** |

- **DATABASE WPI Week 8826 Derwent Publications Ltd., London, GB; AN 88-180924 XP002011636 & JP-A-63 120 196 (DICK HERCULES) , 24 Mai 1988**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 737 728 B1

Printed by Jouve, 75001 PARIS (FR)

## Description

L'invention a pour objet l'utilisation de copolymères fabriqués en émulsion aqueuse à base d'acide acrylique ou méthacrylique, de styrène et/ou de ses dérivés, ainsi qu'éventuellement d'esters d'alkyle en $C_1$ à $C_4$ des acides acryliques et/ou méthacryliques, comme dispersant pour milieux aqueux de charges minérales et/ou de pigments minéraux apportant une résistance à l'eau accrue des films secs ou en cours de séchage des compositions aqueuses chargées et/ou pigmentées.

L'invention concerne également les compositions aqueuses chargées et/ou pigmentées contenant lesdits copolymères solubles en milieu alcalin telles que par exemple les peintures aqueuses mates intérieures ou les peintures aqueuses extérieures d'imperméabilisation ou bien encore les enduits, les crépis, et autres compositions comprenant de haute teneur en charges et/ou pigments minéraux.

Jusqu'à présent, les dispersants hydrosolubles utilisés pour la défloculation dans les formulations à base de pigments ou de charges, se subdivisent en deux familles différentes pour les pigments minéraux, alors que l'homme du métier connaît des copolymères de l'alpha-méthyle styrène et de l'acide acrylique dans des rapports pondéraux de 5/95 et 10/90 pour disperser des pigments organiques (EP 0 099 179).

- La première famille comprend les dispersants acryliques de bas poids moléculaire généralement obtenus par polymérisation radicalaire en solution dont les avantages principaux sont une grande efficacité dispersante c'est-à-dire la possibilité d'empâter avec une énergie mécanique modérée de grandes quantités de pigments minéraux et/ou charges minérales dans un faible volume d'eau contenant le dispersant et une bonne stabilité de viscosité de la formulation obtenue aussi bien dans le temps qu'en température mais dont l'inconvénient majeur est une forte hydrophilie conduisant à une grande sensibilité à l'eau des formulations appliquées en cours et après séchage. Ce phénomène est particulièrement mis en évidence dans les formulations de peinture par les tests de résistance à l'abrasion humide sur film sec (DIN 53778) et de pulvérisation d'eau sur film fraîchement appliqué.

- La deuxième famille est constituée de dispersants de type vinylique obtenus en polymérisation radicalaire dont les plus connus sont les copolymères diisobutylène-anhydride maléique qui confèrent aux formulations en cours et après séchage, une meilleure résistance à l'eau, mise en évidence notamment en peinture, par les tests de résistance à l'abrasion humide sur film sec (DIN 53778) et de pulvérisation d'eau sur film fraîchement appliqué mais dont les inconvénients majeurs sont une efficacité dispersante médiocre et une mauvaise stabilité rhéologique des formulations obtenues aussi bien dans le temps qu'en température.

Une illustration est le brevet US 3,980,602 qui divulgue un copolymère contenant en poids 10 % d'acide acrylique, 30 % de styrène, 25 % de méthacrylate de méthyle et 35 % d'acrylate de butyle dont l'efficacité dispersante est médiocre.

Ainsi jusqu'à présent, l'homme de l'art se trouve toujours confronté au problème de n'avoir à sa disposition que des compositions ne le satisfaisant pas totalement. Ainsi les compositions aqueuses chargées et/ou pigmentées dont il dispose et qui sont stables dans le temps et en température forment des films qui, appliqués comme revêtement, ont une grande sensibilité à l'eau en cours et après séchage ce qui a entre autre pour conséquence, ou bien une mauvaise lavabilité en ce qui concerne les revêtements intérieurs, ou bien une mauvaise résistance aux intempéries et notamment aux chutes de pluie survenant précocemment après l'application en ce qui concerne les revêtements extérieurs. Ceci peut se traduire par exemple par un délavage pour les films minces tels que les films de peintures mates extérieures. D'autre part, l'homme de l'art dispose également à ce jour de compositions aqueuses chargées et/ou pigmentées dont les films appliqués comme revêtement sont relativement insensibles à l'eau mais dont les rhéologies sont instables dans le temps et en température. Ceci se traduit alors essentiellement par une augmentation des viscosités Brookfield ayant pour inconvénient de changer les caractéristiques d'application telles que par exemple le chargement du rouleau ou de la brosse, le tendu de la peinture résultant pour l'utilisateur en des difficultés d'application sur le support, en une plus grande difficulté à mélanger de façon homogène ces peintures avec les pâtes pigmentaires nécessaires à la mise à la teinte finale, ou bien encore en l'impossibilité de prélever la peinture dans son emballage de par sa gélification.

Il a maintenant été découvert que l'utilisation de copolymères fabriqués en émulsion aqueuse de viscosité spécifique inférieure ou égale à 15 qui donnent une solution homogène, limpide à trouble, en milieu neutre ou alcalin et de formule générale (I) :

$$-(A_a)-(B_b)-(C_c)-$$

dans laquelle

A représente l'acide acrylique ou méthacrylique,
B représente le styrène ou ses dérivés tels que l'alpha méthylstyrène ou le vinyl toluène et autres
C représente les acrylates ou méthacrylates d'alkyle possédant de 1 à 4 atomes de carbone.
a représente le pourcentage en poids, par rapport au poids total des monomères, du monomère A et est compris, bornes incluses, entre 40 et 60
b représente le pourcentage en poids, par rapport au poids total des monomères, du monomère B et est compris, bornes incluses, entre 25 et 45
c représente le pourcentage en poids, par rapport au poids total des monomères, du monomère C et est compris, bornes incluses, entre 0 et 20

apporte une résistance à l'eau accrue des compositions chargées et/ou pigmentées tout en conservant un très bon effet dispersant.

Ainsi l'un des buts de l'invention consiste en l'utilisation, dans des compositions aqueuses chargées et/ou pigmentées, d'un copolymère vinylique - acrylique de formule générale (I) obtenu par les procédés bien connus de polymérisation radicalaire en émulsion aqueuse, ayant une bonne efficacité dispersante, et permettant d'obtenir des formulations dotées d'une faible sensibilité à l'eau et d'une bonne stabilité rhéologique aussi bien dans le temps qu'en température.

Un deuxième but de l'invention est de fournir des compositions aqueuses chargées et/ou pigmentées contenant 0,1 % à 0,8 % en poids sec, par rapport à la masse totale sèche des charges et pigments minéraux contenus dans les compositions aqueuses, dudit copolymère dispersant telles que par exemple les peintures mates intérieures ou les peintures extérieures d'imperméabilisation ou les enduits ou les crépis ou bien encore toute composition comprenant une haute teneur en charge et/ou pigment minéraux c'est-à-dire comprenant des quantités proches par valeur inférieure ou supérieure des quantités maximales de pigments et/ou de charges que le liant présent dans la formulation est capable d'enrober.

Ainsi, alors que l'art antérieur décrit pour l'essentiel l'utilisation, comme dispersant, de polymères acryliques de bas poids moléculaire généralement obtenus par les procédés de polymérisation radicalaire en solution, ne conférant pas une résistance à l'eau convenable pour l'utilisateur, l'invention s'en distingue par l'utilisation, comme dispersant conférant une résistance à l'eau satisfaisante pour le consommateur, de copolymères de formule générale (I) :

$$—(A_a)—(B_b)—(C_c)—$$

dans laquelle

A représente l'acide acrylique ou méthacrylique,
B représente le styrène ou ses dérivés tels que l'alpha méthylstyrène ou le vinyl toluène et autres
C représente les acrylates ou méthacrylates d'alkyle possédant de 1 à 4 atomes de carbone.

a représente le pourcentage en poids, par rapport au poids total des monomères, du monomère A et est compris, bornes incluses, entre 40 et 60
b représente le pourcentage en poids, par rapport au poids total des monomères, du monomère B et est compris, bornes incluses, entre 25 et 45
c représente le pourcentage en poids, par rapport au poids total des monomères, du monomère C et est compris, bornes incluses, entre 0 et 20.

Ces copolymères résultent de la copolymérisation d'au moins deux motifs monomériques définis ci-dessus selon les procédés connus de la polymérisation radicalaire en émulsion directe en présence d'initiateurs tels que les peroxydes et les persels, par exemple l'eau oxygénée, l'hydroperoxyde de tertiobutyle, les persulfates de sodium, de potassium, d'ammonium, d'agents réducteurs tels que l'hypophosphite de sodium, l'acide hypophosphoreux, le métabisulfite de sodium et de régulateurs de poids moléculaires appropriés tels que par exemple les alkylmercaptans comme l'octanethiol, le décanethiol, le n-dodécanethiol, le tertiododécylmercaptan ou bien encore par exemple les acides mercapto-acétique, mercapto-propionique, mercapto-valérique, mercapto-benzoïque, mercapto-succinique ou bien encore mercapto-isophtalique ou leurs alkylesters.

Dès la fin de la polymérisation, les copolymères acides en émulsion aqueuse sont recueillis et peuvent, selon l'invention, être mis en oeuvre sous cette forme ou sous une forme partiellement neutralisée à condition d'être neutralisés in situ dans la formulation par un composé alcalin présent dans la dite formulation avant l'introduction des charges et/ou pigments.

Ils peuvent également être totalement neutralisés par des agents de neutralisation tels que par exemple la

potasse, la soude ou l'ammoniaque pour être mis en oeuvre, selon l'invention, sous une forme totalement neutralisée.

Cette neutralisation peut s'accompagner d'une hydrolyse partielle ou totale de l'ester acrylique ou méthacrylique.

Les copolymères fabriqués en émulsion aqueuse destinés à être utilisés dans l'application selon l'invention comme dispersant apportant de la résistance à l'eau accrue des films secs ou en cours de séchage sont des copolymères de formule générale (I), qui donnent une solution homogène, limpide à trouble en milieu neutre ou alcalin et ont une viscosité spécifique inférieure ou égale à 15.

La viscosité spécifique des copolymères sélectionnés, qui est symbolisée par la lettre "η" est déterminée de la manière suivante :

On prépare une solution de copolymère sous forme de sel sodique par dissolution de 20 g du copolymère sec dans un litre d'un solvant composé d'un mélange eau-tétrahydrofurane dans un rapport volumique 1-1.

Puis, on mesure avec un viscosimètre capillaire du type UBBELOHDE de constante k = 0,01 cStoke/s et de limite de mesure 1,2 à 10 cStoke placé dans un bain thermostaté à 25°C le temps d'écoulement d'un volume donné de la solution précitée contenant le copolymère alcalin ainsi que le temps d'écoulement du même volume de solvant dépourvu dudit copolymère. n est alors possible de définir la viscosité spécifique "η" grâce à la relation suivante :

$$\eta = \frac{\text{(Temps d'écoulement de la solution de copolymère) - (Temps d'écoulement du solvant)}}{\text{(Temps d'écoulement du solvant)}}$$

La quantité de copolymères fabriqués en émulsion aqueuse destinés être utilisés, selon l'invention, comme dispersant apportant de la résistance l'eau des films secs ou en cours de séchage, est comprise entre 0,1 % et 0,8% en poids sec desdits copolymères par rapport à la masse totale sèche des charges et pigments minéraux contenus dans les compositions aqueuses chargées et/ou pigmentées.

L'invention concerne également les compositions aqueuses chargées et/ou pigmentées contenant le copolymère dispersant apportant la résistance à l'eau. Ces compositions aqueuses chargées et/ou pigmentées, selon l'invention, contiennent comme constituants principaux, de l'eau, des charges et/ou des pigments minéraux tels que les carbonates de calcium d'origine naturelle ou synthétique, le carbonate de magnésium, le carbonate de zinc, les sels mixtes de magnésium et de calcium tels que les dolomies, la chaux, la magnésie, le sulfate de baryum, les sulfates de calcium, les hydroxydes de magnésium, d'aluminium, la silice, la wollastonite, les argiles et autres silico-alumineux tels que les kaolins, les silico-magnésiens tels que le talc, le mica, les oxydes métalliques tels que par exemple l'oxyde de zinc, les oxydes de fer, l'oxyde de titane, un ou plusieurs liants naturels ou synthétiques, l'agent dispersant apportant la résistance à l'eau et éventuellement des adjuvants aussi divers que des agents de coalescence, des épaississants, des biocides, des tensio-actifs, des anti-mousses ou autres.

Ces compositions aqueuses chargées et/ou pigmentées, selon l'invention, sont des compositions aqueuses de revêtement hautement chargées et/ou pigmentées telles que des sauces d'enduction parmi lesquelles les sauces de couchage papetière ou les sauces d'enduction pour textile, des crépis, des enduits, des peintures aqueuses et plus particulièrement des peintures aqueuses mates intérieures ou des peintures aqueuses extérieures d'imperméabilisation.

La portée et l'intérêt de l'invention seront mieux perçus grâce aux exemples suivants.

EXEMPLE 1 :

Cet exemple concerne l'utilisation de divers dispersants dans une peinture aqueuse mate intérieure pour évaluer leur efficacité dispersante et leur capacité d'accroître la résistance à l'eau des films secs c'est-à-dire évaluer la stabilité rhéologique et la résistance à l'eau des diverses peintures mates intérieures obtenues.

Pour tous les essais, à l'exception de l'essai témoin, nous rajoutons sous agitation 0,12 % en poids sec du dispersant testé, par rapport au poids total d'une même formulation peinture aqueuse mate, dans un récipient contenant déjà 160 g d'eau et 1 g d'ammoniaque à 28 %.

Après quelques secondes d'agitation suivant l'introduction du copolymère dispersant dans l'eau ammoniaquée, on introduit successivement les autres constituants de la dite peinture aqueuse mate qui sont :

| | |
|---|---|
| 2 g | d'un biocide commercialisé par la société RIEDEL DE HAEN sous le nom de MERGAL K6N |
| 1 g | d'un antimousse commercialisé par la société BYK sous le nom de BYK 034 |
| 41 g | de rutile commercialisé par la société THANN et MULHOUSE sous le nom RL 68 |
| 327,9 g | de carbonate de calcium naturel commercialisé par la société OMYA sous le nom DURCAL 2 |
| 215,2 g | de carbonate de calcium naturel commercialisé parla société OMYA sous le nom HYDROCARB |

(suite)

| | |
|---|---|
| 82 g | d'un liant styrène-acrylique en dispersion commercialisé par la société RHONE-POULENC sous le nom de RHODOPAS DS 910 |
| 10,2 g | de monoéthylène glycol |
| 10,2 g | de White Spirit |
| 1,3 g | d'ammoniaque à 28 % |
| 13,6 g | d'un épaississant commercialisé par COATEX sous le nom VISCOATEX 46 |
| qsp 1000 g | en eau. |

Les divers dispersants testés sont :

Essai n° 1:

Cet essai est l'essai témoin dans lequel aucun agent dispersant n'est rajouté.

Essai n° 2:

Cet essai illustre l'art antérieur et met en oeuvre un acide pplyacrylique neutralisé totalement par de la soude et vendu par COATEX sous le nom COATEX P50.

Hssai n° 3 :

Cet essai illustre l'art antérieur et met en oeuvre un copolymère diisobutylène-anhydride maléïque neutralisé totalement par de la soude et vendu par la société ROHM & HAAS sous le nom OROTAN 731.

Essai n° 4 :

Cet essai illustre l'art antérieur et met en oeuvre un copolymère diisobutylène-anhydride maléïque neutralisé totalement par de la soude et vendu par la société RHONE-POULENC sous le nom SOPROPHOR T36.

Essai n° 5 :

Cet essai illustre l'invention et met en oeuvre un dispersant de viscosité spécifique égale à 12 et composé de :

- 44,0 % en poids d'acide méthacrylique
- 40,5 % en poids de styrène
- 15,5 % en poids d'acrylate de butyle

Essai n° 6 :

Cet essai illustre l'invention et met en oeuvre un dispersant de même composition monomérique que celui de l'essai n° 5 mais de viscosité spécifique égale à 0,22.

Essai n° 7 :

Cet essai illustre l'invention et met en oeuvre un dispersant de même composition monomérique que celui de l'essai n° 5 mais de viscosité spécifique égale à 0,15.

Essai n° 8 :

Cet essai illustre l'invention et met en oeuvre un dispersant de viscosité spécifique égale à 0,20 et composé de :

- 50,0 % en poids d'acide méthacrylique
- 36,3 % en poids de styrène
- 13,7 % en poids de méthacrylate de butyle saponifié par de la potasse en fin de polymérisation

Essai n° 9 :

Cet essai illustre l'invention et met en oeuvre un dispersant de viscosité spécifique égale à 0,45 et composé de :

- 50,0 % en poids d'acide méthacrylique
- 36,3 % en poids de styrène
- 13,7 % en poids d'acrylate de butyle

Essai n° 10 :

Cet essai illustre l'invention et met en oeuvre un dispersant de même composition monomérique que celui de l'essai n° 9 mais de viscosité spécifique égale à 0,23.

Essai n° 11:

Cet essai illustre l'invention et met en oeuvre un dispersant de viscosité spécifique égale à 0,48 et composé de:

- 55,0 % en poids d'acide méthacrylique
- 32,6 % en poids de styrène
- 12,4 % en poids d'acrylate de butyle

Essai n° 12 :

Cet essai illustre l'invention et met en oeuvre un dispersant de viscosité spécifique égale à 0,23 et composé de :

- 60,0 % en poids d'acide méthacrylique
- 29,0 % en poids de styrène
- 11,0 % en poids d'acrylate de butyle

Pour chacun des précédents essais, après quelques minutes d'agitation de la composition aqueuse ainsi réalisée, on mesure les viscosités Brookfield des différentes compositions à 25°C, à 10 tours par minute à l'aide d'un viscosimètre Brookfield type RVT équipé du mobile adéquat.

La stabilité rhéologique dans le temps et en température des formulations est déterminée par la mesure des viscosités Brookfield à 10 tours par minute et à 25°C de ces formulations après un stockage sans agitation de 24 heures à température ambiante, puis après un stockage d'une semaine dans une étuve à 50°C et enfin après un stockage d'un mois dans la même étuve à 50°C.

Au cours de la préparation des compositions des précédents essais, on procède également à une évaluation visuelle de la dimension du vortex présent autour des l'axe d'agitation tout au long de l'ajout des charges et/ou des pigments minéraux ainsi que des divers additifs pour estimer la facilité à l'empâtage de la composition, facilité à l'empâtage qui est un élément constitutif de l'efficacité dispersante.

Ainsi dans le tableau 1 regroupant tous les résultats obtenus pour les différents essais, il sera noté dans la colonne intitulée facilité à l'empâtage :

- TB lorsque le vortex aura conservé une dimension et une forme constantes tout au long de l'incorporation des charges et/ou pigments minéraux traduisant ainsi une très bonne fluidité de la composition obtenue

- B lorsque la dimension du vortex aura légèrement diminué au cours de l'incorporation des charges et/ou pigments minéraux

- AB lorsque le vortex devient tout petit au cours de l'incorporation des charges et/ou pigments minéraux mais permet tout de même une homogénéisation des divers composants de la formulation.

La notation M figurant pour l'essai témoin signifie que le vortex autour de l'axe d'agitation a complètement disparu provoquant ainsi une mauvaise homogénéisation du milieu.

Le comportement rhéologique des diverses peintures mates intérieures ayant été ainsi mesuré, on procède pour tous les essais aux tests de résistance à l'abrasion humide sur film sec selon la norme DIN 53778, partie n° 2.

Ce test consiste à déterminer à l'aide de l'abrasimètre GARDNER modèle M 105-A (homologué DIN 53778), le nombre d'aller-retours que fait une brosse calibrée selon la norme DIN 53778, en frottant sur un film de peinture préalablement séché sur une carte LENETA et d'une épaisseur de 100 micromètres en présence d'une solution détergente pour abraser complètement ce film de peinture.
Tous ces résultats sont rassemblés dans le tableau 1 suivant:

# TABLEAU 1

| | ESSAI n° | DISPERSANT SEC % poids | VISCOSITES BROOKFIELD DE LA PEINTURE | | | | FACILITE A L'EMPATAGE | RESISTANCE A L'ABRASION HUMIDE nombre d'aller-retours (DIN 53778) |
|---|---|---|---|---|---|---|---|---|
| | | | T = 0 10 T/mn (mPa.s) | T = 24 heures 10 T/mn (mPa.s) | T = 1 Semaine 50°C 10 T/mn (mPa.s) | T = 1 Mois 50°C 10 T/mn (mPa.s) | | |
| TEMOIN | 1 | 0 | 21000 | 34000 | 66000 | 68000 | M | 500 |
| ART ANTERIEUR | 2 | 0,12 | 11000 | 10000 | 10000 | 10000 | TB | 240 |
| | 3 | 0,12 | 16500 | 27000 | 80000 | 80000 | AB | 950 |
| | 4 | 0,12 | 17000 | 32000 | 70000 | 70000 | AB | 750 |
| INVENTION | 5 | 0,12 | 17500 | 18000 | 48000 | 48000 | AB | 1050 |
| | 6 | 0,12 | 19000 | 21000 | 47000 | 47000 | AB | 1010 |
| | 7 | 0,12 | 21000 | 21000 | 48000 | 48000 | AB | 1230 |
| | 8 | 0,12 | 16000 | 21000 | 56000 | 57000 | TB | 1410 |
| | 9 | 0,12 | 20000 | 21000 | 49000 | 56000 | TB | 1290 |
| | 10 | 0,12 | 15000 | 17000 | 31000 | 36000 | TB | 1300 |
| | 11 | 0,12 | 16000 | 18000 | 44000 | 42000 | TB | 1090 |
| | 12 | 0,12 | 17000 | 18000 | 44000 | 50000 | TB | 1260 |

La lecture du tableau 1 permet de constater que seules les peintures aqueuses selon l'invention présentent à la fois une bonne stabilité rhéologique c'est-à-dire des viscosités Brookfield à 10 Tours par minute et à 25°C inférieures à 60000 mPa.s, une facilité à l'empâtage au moins assez bonnes (AB) et une bonne résistance à l'abrasion humide accrue et convenable pour l'utilisation c'est-à-dire résistant à plus de 1000 aller-retours de la brosse sur le film de peinture, cette valeur de 1000 aller-retours correspondant à une qualité de peinture lavable selon DIN 53778.

EXEMPLE 2:

Cet exemple concerne l'utilisation de divers dispersants dans une peinture aqueuse extérieure d'imperméabilisation pour évaluer leur efficacité dispersante et leur capacité d'accroître la résistance à l'eau des films en cours de séchage, c'est-à-dire que cet exemple revient à évaluer la stabilité rhéologique et la résistance à l'eau par un test de pulvérisation d'eau simulant les chutes de pluie, des diverses peintures aqueuses extérieures obtenues.

Pour tous les essais, à l'exception de l'essai témoin, on rajoute sous agitation 0,20 % en poids sec du dispersant testé, par rapport au poids total d'une même formulation peinture extérieure, dans un récipient contenant déjà 62,3 g d'eau et 2 g d'antimousse commercialisé par la société BYK sous le nom BYK 033.

Après quelques secondes d'agitation suivant l'introduction du copolymère dispersant dans l'eau additivée de l'antimousse, on introduit successivement les autres constituants de la dite peinture extérieure qui sont :

| | |
|---|---|
| 9 g | d'un bactéricide fongicide commercialisé par les Laboratoires PHAGOGENE sous le nom de PARMETOL DF 18 |
| 5,5 g | d'un épaississant polyuréthanne commercialisé par la société COATEX sous le nom COATEX BR125 P |
| 1,5 g | d'une alcanolamine vendue par la société ANGUS sous le nom AMP 90 |
| 29,0 g | de propylène glycol |
| 18,9 g | de mica commercialisé par la société COMPTOIR DE MINÉRAUX ET MATIERES PREMIÈRES sous le nom de MU2/1 |
| 75,5 g | de sulfate de baryum commercialisé parla société SACHTLEBEN CHEMIE sous le nom de BLANC FIXE MICRO |
| 74,0 g | de talc commercialisé par la société TALC DE LUZENAC sous le nom TALC 20M |
| 195,0 g | de rutile commercialisé par la société TIOXIDE sous le nom TR 92 |
| 350,0 g | d'un latex commercialisé par la société ROHM & HAAS sous le nom PRIMAL EP 5231 |
| 69,0 g | d'un pigment plastique commercialisé par la société ROHM & HAAS sous le nom de ROPAQUE OP 62 |
| 2,0 g | d'antimousse commercialisé par la société BYK sous le nom de BYK 033 |
| 9,8 g | d'un tensio-actif type nonyl-phénol oxyéthylé 30 fois |
| 2,0 g | d'un bactéricide biocide commercialisé par la société PROGIVEN sous le nom BIOCIDE K10 |
| 5,6 g | d'un épaississant commercialisé par la société ROHM & HAAS sous le nom ACRYSOL TT 615 |
| 10,0 g | d'un plastifiant à base de tributylphosphate |
| et qsp à 1000 g d'eau | |

Les divers dispersants testés sont :

Essai n° 13 :

Cet essai est l'essai témoin dans lequel aucun agent dispersant n'est rajouté.

Essai n° 14 :

Cet essai illustre l'art antérieur et met en oeuvre un acide polyacrylique neutralisé totalement par de la soude et vendu par COATEX sous le nom COATEX P 50.

Essai n° 15:

Cet essai illustre l'art antérieur et met en oeuvre un copolymère diisobutylène-anhydride maléïque neutralisé totalement par de la soude et vendu par la société ROHM & HAAS sous le nom OROTAN 731.

Essai n° 16 :

Cet essai illustre l'art antérieur et met en oeuvre un copolymère diisobutylène-anhydride maléïque neutralisé totalement par de la soude et vendu par la société RHONE-POULENC sous le nom SOPROPHOR T36.

Essai n° 17 :

Cet essai illustre l'invention et met en oeuvre le même copolymère que celui de l'essai n° 5.

Essai n° 18 :

Cet essai illustre l'invention et met en oeuvre le même copolymère que celui de l'essai n° 6.

Essai n° 19 :

Cet essai illustre l'invention et met en oeuvre le même copolymère que celui de l'essai n° 7.

Essai n° 20 :

Cet essai illustre l'invention et met en oeuvre le même copolymère que celui de l'essai n° 8.

Essai n° 21 :

Cet essai illustre l'invention et met en oeuvre le même copolymère que celui de l'essai n° 9.

Essai n° 22 :

Cet essai illustre l'invention et met en oeuvre le même copolymère que celui de l'essai n° 10.

Essai n° 23 :

Cet essai illustre l'invention et met en oeuvre le même copolymère que celui de l'essai n° 11.

- Les diverses peintures ainsi réalisées, on procède aux mesures des viscosités Brookfield à 10 tours par minute, 100 tours par minute et à 25°C ainsi qu'à l'estimation de la facilité d'empâtage de ces divers essais avec le même matériel et comme décrit dans l'exemple 1.

- La résistance à l'eau et notamment la résistance aux chutes de pluies précoces intervenant pendant le séchage de la peinture aqueuse extérieure est déterminée par le test de pulvérisation d'eau sur film fraîchement appliqué.

Ce test consiste à pulvériser environ 150 ml d'eau pendant 2 minutes sur 500 $cm^2$ d'un film de peinture appliqué une demi-heure auparavant à la brosse à raison de 200 $g/m^2$ en humide sur la moitié d'une carte de contraste LENETA placée verticalement et à observer la formation de coulures éventuelles sur la partie inférieure de la carte LENETA non peinte, le tout dans des conditions de température et d'hygrométrie fixée.

Le test est jugé positif (noté P sur le tableau 2 qui suit) si l'on n'observe aucune coulure sur la partie non peinte de la carte LENETA.

Il est jugé acceptable (noté A sur le tableau 2 qui suit) s'il y a quelques coulures sur la partie non peinte de la carte LENETA et si aucune zone de la partie peinte de la carte LENETA ne présente de motif totalement apparent.

Enfin il est considéré négatif (noté N sur le tableau 2 qui suit) si des coulures de peinture apparaissent sur la partie non peinte de la carte LENETA et si des zones de la partie peinte de la carte LENETA présentent des motifs totalement apparents

Tous les résultats des mesures précitées figurent dans le tableau 2 suivant.

## TABLEAU 2

| | ESSAI n° | DISPERSANT SEC % poids | VISCOSITES BROOKFIELD DE LA PEINTURE T = 0 10 T/mn - 100 T/mn (mPa.s) | T = 24 heures 10 T/mn - 100 T/mn (mPa.s) | T = 1 Semaine 50°C 10 T/mn - 100 T/mn (mPa.s) | T = 1 Mois 50°C 10 T/mn - 100 T/mn (mPa.s) | FACILITE A L'EMPATAGE | PULVERISATION D'EAU SUR FILM FRAICHEMENT APPLIQUE |
|---|---|---|---|---|---|---|---|---|
| TEMOIN | 13 | 0 | 22000/7300 | 43000/16800 | 56000/18000 | 56000/18400 | AB | (P) |
| ART ANTERIEUR | 14 | 0,20 | 14000/4300 | 24000/8400 | 23000/7600 | 26000/8000 | B | (N) |
| | 15 | 0,20 | 18000/5700 | 44000/14800 | 68000/17200 | 66000/17600 | AB | (P) |
| | 16 | 0,20 | 16000/5600 | 40000/14000 | 56000/16000 | 56000/16400 | AB | (P) |
| INVENTION | 17 | 0,20 | 22000/7200 | 38000/12000 | 46000/13600 | 46000/13600 | AB | (P) |
| | 18 | 0,20 | 17000/5600 | 28000/9600 | 34000/10800 | 44000/14000 | AB | (P) |
| | 19 | 0,20 | 22000/6400 | 34000/11200 | 52000/15200 | 54000/15200 | AB | (A) |
| | 20 | 0,20 | 16000/5600 | 24000/8800 | 22000/7600 | 22000/8000 | AB | (A) |
| | 21 | 0,20 | 22000/7600 | 36000/11200 | 40000/13200 | 40000/12800 | B | (P) |
| | 22 | 0,20 | 22000/7400 | 28000/9200 | 34000/11600 | 32000/10000 | AB | (A) |
| | 23 | 0,20 | 24000/7600 | 28000/9200 | 40000/15200 | 38000/12400 | B | (A) |

La lecture du tableau 2 permet de constater que seules les peintures aqueuses extérieures selon l'invention présentent à la fois une bonne résistance à l'eau (notée A ou P) et une bonne stabilité rhéologique c'est-à-dire ont après un mois de stockage dans une étuve à 50°C des viscosités Brookfield à 10 tours par minute et à 25°C inférieures à 55000 mPa.s et à 100 tours par minute et à 25°C inférieures à 16000 mPa.s.

## Revendications

1. Utilisation de copolymères fabriqués en émulsion aqueuse, qui donnent une solution homogène, limpide à trouble en milieu neutre ou alcalin, de viscosité spécifique inférieure ou égale à 15 et de formule générale (I) :

$$-(A_a)-(B_b)-(C_c)-$$

dans laquelle

A représente l'acide acrylique ou méthacrylique,
B représente le styrène ou ses dérivés tels que l'alpha méthylstyrène ou le vinyl toluène
C représente les acrylates ou méthacrylates d'alkyle possédant de 1 à 4 atomes de carbone.

a représente le pourcentage en poids, par rapport au poids total des monomères, du monomère A et est compris, bornes incluses, entre 40 et 60
b représente le pourcentage en poids, par rapport au poids total des monomères, du monomère B et est compris, bornes incluses, entre 25 et 45
c représente le pourcentage en poids, par rapport au poids total des monomères, du monomère C et est compris, bornes incluses, entre 0 et 20

comme dispersant de charges et/ou pigments minéraux apportant de la résistance à l'eau des films secs ou en cours de séchage de compositions aqueuses hautement chargées et/ou pigmentées.

2. Utilisation de copolymères fabriqués en émulsion aqueuse selon la revendication 1 **caractérisée en ce que** les compositions aqueuses hautement chargées et/ou pigmentées sont choisies parmi les peintures aqueuses, les enduits, les crépis ou les sauces d'enduction.

3. Utilisation de copolymères fabriqués en émulsion aqueuse selon la revendication 2 **caractérisée en ce que** les compositions aqueuses hautement chargées et/ou pigmentées sont préférentiellement des peintures aqueuses mates intérieures ou des peintures aqueuses extérieures d'imperméabilisation.

4. Utilisation de copolymères fabriqués en émulsion aqueuse selon l'une quelconque des revendications 1 à 3 **caractérisée en ce que** l'on utilise 0,1 % à 0,8 % en poids sec dudit copolymère par rapport à la masse totale sèche des charges et pigments minéraux contenus dans la composition aqueuse chargée et/ou pigmentée.

5. Composition aqueuse hautement chargée et/ou pigmentée contenant 0,1 % à 0,8 % en poids sec, par rapport au poids total sec des charges et pigments minéraux présents dans la composition, de copolymère fabriqué en émulsion aqueuse et utilisé selon l'une quelconque des revendications 1 à 4.

6. Composition aqueuse hautement chargée et/ou pigmentée selon la revendication 5 **caractérisée en ce qu'**elle est choisie parmi les peintures aqueuses, les enduits, les crépis, ou les sauces d'enduction.

7. Composition aqueuse hautement chargée et/ou pigmentée selon la revendication 6 **caractérisée en ce qu'**elle est une peinture aqueuse mate intérieure.

8. Composition aqueuse hautement chargée et/ou pigmentée selon la revendication 6 **caractérisée en ce qu'**elle est une peinture aqueuse extérieure d imperméabilisation.

9. Composition aqueuse hautement chargée et/ou pigmentée selon la revendication 6 **caractérisée en ce qu'**elle

est un crépis, un enduit ou une sauce d'enduction.

## Patentansprüche

1. Verwendung von in wässriger Emulsion hergestellten Copolymeren, die eine homogene, in neutralem oder alkalischem Medium durchsichtige bis trübe Lösung mit einer spezifischen Viskosität kleiner oder gleich 15 ergeben, mit der allgemeinen Formel (I):

$$—(A_a)—(B_b)—(C_c)—$$

worin

A Acryl- oder Methacrylsäure wiedergibt,
B Styrol oder dessen Derivate, wie Alpha-Methylstyrol oder Vinyltoluol, wiedergibt,
C Alkylacrylate oder -methacrylate mit 1 bis 4 Kohlenstoffatomen wiedergibt;

a die Gewichtsprozente, bezogen auf das Gesamtgewicht der Monomere, des Monomers A angibt und, einschließlich der Grenzen, von 40 bis 60 reicht,
b die Gewichtsprozente, bezogen auf das Gesamtgewicht der Monomere, des Monomers B angibt und, einschließlich der Grenzen, von 25 bis 45 reicht,
c die Gewichtsprozente, bezogen auf das Gesamtgewicht der Monomere, des Monomers C angibt und, einschließlich der Grenzen, von 0 bis 20 reicht,

als Dispersionsmittel mineralischer Füllstoffe und/oder mineralischer Pigmente, die trockenen Filmen oder, während des Trocknens, stark gefüllten und/oder pigmentierten wässrigen Zusammensetzungen, Wasserfestigkeit verleihen.

2. Verwendung von in wässriger Emulsion hergestellten Copolymeren nach Anspruch 1, **dadurch gekennzeichnet, dass** die stark gefüllten und/oder pigmentierten wässrigen Zusammensetzungen aus wässrigen Anstrichfarben, Putzen, Rauhputzen oder Beschichtungsmassen ausgewählt sind.

3. Verwendung von in wässriger Emulsion hergestellten Copolymeren nach Anspruch 2, **dadurch gekennzeichnet, dass** die stark gefüllten und/oder pigmentierten wässrigen Zusammensetzungen vorzugsweise wässrige matte Innenanstrichfarben oder wässrige Außenimprägnierfarben sind.

4. Verwendung von in wässriger Emulsion hergestellten Copolymeren nach einem der Ansprüche 1 bis 3, **dadurch gekennzeichnet, dass** 0,1 bis 0,8% Trockenmasse des Copolymers, bezogen auf die Gesamttrockenmasse der mineralischen Füllstoffe und mineralischen Pigmente, die in der stark gefüllten und/oder pigmentierten wässrigen Zusammensetzung enthalten sind, verwendet werden.

5. Wässrige, stark gefüllte und/oder pigmentierte Zusammensetzung, die 0,1 bis 0,8% Trockenmasse, bezogen auf die Gesamttrockenmasse der mineralischen Füllstoffe und mineralischen Pigmente in der Zusammensetzung, des in wässriger Emulsion hergestellten und gemäß einem der Ansprüche 1 bis 4 eingesetzten Copolymers enthält.

6. Wässrige, stark gefüllte und/oder pigmentierte Zusammensetzung nach Anspruch 5, **dadurch gekennzeichnet, dass** sie ausgewählt ist aus wässrigen Anstrichfarben, Putzen, Rauhputzen oder Beschichtungsmassen.

7. Wässrige, stark gefüllte und/oder pigmentierte Zusammensetzung nach Anspruch 6, **dadurch gekennzeichnet, dass** sie eine wässrige matte Innenanstrichfarbe ist.

8. Wässrige, stark gefüllte und/oder pigmentierte Zusammensetzung nach Anspruch 6, **dadurch gekennzeichnet, dass** sie eine wässrige Außenimprägnierfarbe ist.

9. Wässrige, stark gefüllte und/oder pigmentierte Zusammensetzung nach Anspruch 6, **dadurch gekennzeichnet, dass** sie ein Putz, ein Rauhputz oder eine Beschichtungsmasse ist.

## Claims

1. Use of copolymers made in aqueous emulsion, which give a clear to cloudy homogeneous solution in a neutral or alkaline medium, having a specific viscosity less than or equal to 15 and of general formula (I):

$$-(A_a)-(B_b)-(C_c)-$$

in which

A represents acrylic or methacrylic acid,
B represents styrene or its derivatives such as alphamethylstyrene or vinyl toluene,
C represents alkyl acrylates or methacrylates having 1 to 4 carbon atoms.

a represents the percentage by weight, relative to the total weight of the monomers, of monomer A and is between 40 and 60 inclusive of the limits,
b represents the percentage by weight, relative to the total weight of the monomers, of monomer B and is between 25 and 45 inclusive of the limits,
c represents the percentage by weight, relative to the total weight of the monomers, of monomer C and is between 0 and 20 inclusive of the limits,

as a dispersant for fillers and/or pigments of the mineral type bringing water resistance to dry or drying films of highly filled and/or pigmented aqueous compositions.

2. Use of copolymers made in aqueous emulsion according to the claim 1, **characterised by** the fact that the highly filled and/or pigmented aqueous compositions are selected from aqueous paints, fillers, thick film coatings or coatings.

3. Use of copolymers made in aqueous emulsion according to the claim 2, **characterised by** the fact that the highly filled or pigmented aqueous compositions are preferably matt interior aqueous paints or exterior water-proofing aqueous paints.

4. Use of copolymers made in aqueous emulsion according to the one of claims 1 to 3, **characterised by** the fact that 0.1% to 0.8% by dry weight of the said copolymer is used relative to the total dry mass of the fillers and pigments of the mineral type contained in the filled and/or pigmented aqueous composition.

5. Highly filled and/or pigmented aqueous composition containing 0.1% to 0.8% by dry weight, relative to the total dry weight of the fillers and pigments mineral of the mineral type present in the composition, of copolymer made in aqueous solution and used according to any one of claims 1 to 4.

6. Highly filled and/or pigmented aqueous composition according-to the claim 5, **characterised by** the fact that it is selected from aqueous paints, fillers, thick film coatings or coatings.

7. Highly filled and/or pigmented aqueous composition according to the claim 6, **characterised by** the fact that it is a matt interior aqueous paint.

8. Highly filled and/or pigmented aqueous composition according to the claim 6, **characterised by** the fact that it is an exterior water-proofing aqueous paint.

9. Highly filled and/or pigmented aqueous composition according to the claim 6, **characterised by** the fact that it is a thick film coating, a filler or a coating.